# EUROPÄISCHE PATENTSCHRIFT

(11) **EP 1 707 432 B1**
(45) Veröffentlichungstag und Bekanntmachung des Hinweises auf die Patenterteilung: **26.03.2008**
(21) Anmeldenummer: 06006861.6
(22) Anmeldetag: 31.03.2006
(51) Int. Cl.: B60N 2/36, B60N 2/44

(54) **Fahrzeugkomponente, insbesondere zum Ver- und Entriegeln von Fahrzeugteilen**
Vehicle component, particularly for locking and unlocking vehicle parts
Composant de véhicule, en particulier pour le verrouillage et déverrouillage de pièces de véhicule

(30) Priorität: 01.04.2005 DE 102005015353
(43) Veröffentlichungstag der Anmeldung: 04.10.2006
(73) Patentinhaber: Johnson Controls GmbH, 51399 Burscheid (DE); GM Global Technology Operations, Inc., Detroit, MI 48265-3000 (US)
(72) Erfinder: Thies, Marcus, 58285 Gevelsberg (DE); Simeonidis, Antonio, 42281 Wuppertal (DE); Noack, Livio, 55278 Ueversheim (DE)
(74) Vertreter: Brosch, Oliver

(56) Entgegenhaltungen:
- EP-A- 1 107 086
- WO-A-01/23207
- DE-A1- 19 649 077
- US-A- 3 788 685

## Beschreibung

Die vorliegende Erfindung betrifft eine Kraftfahrzeugkomponente, insbesondere zum Ver- und Entriegeln von Fahrzeugteilen mit einem Betätigungselement, das in einem Führungselement angeordnet ist.

Komponenten zum Ver- und Entriegeln von Fahrzeugteilen sind aus dem Stand der Technik bekannt und werden beispielsweise in der DE 196 49 077 A1 oder in der EP 1 107 086 B1 offenbart. Die in diesen Schriften genannten Verriegelungsmechanismen sind jedoch vergleichsweise aufwendig herzustellen und nur lokal betätigbar. Weitere Komponenten sind aus der US 3,788,685 sowie der WO 01/23207 A1 bekannt, die jedoch zu Geräuschbildung neigen.

Es war deshalb die Aufgabe der vorliegenden Erfindung, eine Kraftfahrzeugkomponente, insbesondere zum Ver- und Entriegeln von Kraftfahrzeugteilen, zur Verfügung zu stellen, die die Nachteile des Standes der Technik nicht aufweist.

Gelöst wird die Aufgabe mit einer Kraftfahrzeugkomponente, insbesondere zum Ver- und Entriegeln von Fahrzeugteilen mit einem Betätigungselement, das in einem Führungselement angeordnet ist, wobei das Führungselement eine Längsachse aufweist, vorzugsweise das Betätigungselement entlang dieser Längsachse axial verschieblich angeordnet ist, und sie ein Mittel aufweist, das das Betätigungselement gegen das Führungselement vorspannt.

Es war für den Fachmann überaus erstaunlich und nicht zu erwarten, dass die erfindungsgemäße Kraftfahrzeugkomponente einfach und kostengünstig herzustellen und zu betreiben ist. Die erfindungsgemäße Komponente kann von einem beliebigen Ort innerhalb des Fahrzeuges manuell oder maschinell bedient werden, so dass die erfindungsgemäße Kraftfahrzeugkomponente auch an sehr schlecht zugänglichen Stellen angeordnet werden kann. Die erfindungsgemäße Kraftfahrzeugkomponente kann sehr hohe Kräfte aufnehmen, so dass sie sich beispielsweise auch zum Verriegeln von Sitzen in ihrer jeweiligen Gebrauchsposition eignet. Bei der erfindungsgemäßen Kraftfahrzeugkomponente ist die Geräuschentwicklung, insbesondere bei niederfrequenten Schwingungen, sehr stark vermindert.

Erfindungsgemäß weist die Fahrzeugkomponente ein Betätigungselement auf, das in einem Führungselement geführt wird. Dieses Betätigungselement ist beispielsweise ein Verriegelungsbolzen, der an einer Fahrzeugkomponente angeordnet ist und der mit einer entsprechenden Ausnehmung, die an einer anderen Fahrzeugkomponente angeordnet ist, reversibel form- und/oder kraftschlüssig zusammenwirken kann, so dass die beiden Fahrzeugkomponenten reversibel miteinander verriegelt sind und somit Kräfte von der einen Fahrzeugkomponente auf die andere Fahrzeugkomponente übertragbar sind.

Vorzugsweise ist das Betätigungselement in dem Führungselement entlang dessen Längsachse axial verschieblich angeordnet, so dass es vorzugsweise in mindestens zwei Stellungen, beispielsweise einer Ver- und einer Entriegelungsstellung, verschiebbar ist. Vorzugsweise entspricht die Innenkontur des Führungselements im wesentlichen der Außenkontur des Betätigungselementes, Vorzugsweise handelt es sich bei dem Führungselement um ein rohrartiges Gebilde, das einen beliebigen, jedoch vorzugsweise runden, Querschnitt aufweist. Vorzugsweise ist die Führungskomponente aus einem metallischen Werkstoff. Die Führungskomponente ist in der Regel fest mit einer Fahrzeugkomponente, beispielsweise der Rücklehne einer Bank innerhalb des Fahrzeuges verbunden.

Außerdem weist die erfindungsgemäße Kraftfahrzeugkomponente ein Mittel auf, das das Betätigungselement gegen das Führungselement vorspannt, so dass sich das Betätigungselement und das Führungselement in mindestens einem Punkt, vorzugsweise jedoch entlang mindestens einer Linie und noch mehr bevorzugt auf einer Fläche vorzugsweise ständig berührt, so dass es zwischen den beiden Teilen zu keiner Geräuschentwicklung durch Aneinanderschlagen kommt. Insbesondere soll die Vorspannung verhindern, dass sich die Amplitude der Schwingungen des Betätigungselementes mit der Zeit erhöhen.

Erfindungsgemäß ist das Betätigungselement in jeder möglichen Stellung gegen das Führungselement vorgespannt, so dass es weder beispielsweise im ent- oder im verriegelten Zustand zu ungewollten Schwingungen und damit einer ungewollten Geräuschentwicklung kommen kann.

Vorzugsweise befindet sich zwischen dem Führungselement und dem Betätigungselement ein gewisses Spiel, so dass das Betätigungselement im vorgespannten Zustand exzentrisch in dem Führungselement angeordnet ist. Das Spiel reduziert den Herstellungs- und Montageaufwand und vermindert die Kräfte, die zur Bewegung des Betätigungselementes benötigt werden.

Weiterhin bevorzugt wird die Vorspannkraft so gewählt, dass sich dadurch die Geräuschentwicklung nicht jedoch die Verschiebekraft des Betätigungselements in dem Führungselement unnötigerweise erhöht, so dass das Betätigungselement leicht innerhalb des Führungselementes bewegbar ist.

Das Betätigungselement kann jedes Element in einem Fahrzeug sein, dass manuell oder maschinell bewegt wird. Vorzugsweise handelt es sich bei dem Betätigungselement jedoch um einen Sperrbolzen, der reversibel mit einer Ausnehmung zusammenwirkt und beispielsweise die Lehne einer Rückbank an der Karosserie reversibel verankert.

Vorzugsweise handelt es sich bei dem Mittel, mit dem das Betätigungselement gegen das Führungselement vorgespannt wird, um ein Federelement, das zwischen dem Betätigungselement und dem Führungselement wirkt. Vorzugsweise ist dieses Federelement mit dem Betätigungselement verbunden und drückt federnd gegen die Innenseite des Führungselementes. Der Fachmann erkennt, dass das Federelement jedoch auch an dem Führungselementes, vorzugsweise an dessen Innenseite angeordnet sein kann und federn gegen das Betätigungselement drückt. Die erfindungsgemäße Kraftfahrzeugkomponente kann ein oder mehrere Vorspannmittel, beispielweise Federelemente, aufweisen. Vorzugsweise weist die erfindungsgemäße Kraftfahrzeugkomponente lediglich ein Vorspannmittel auf.

Vorzugsweise ist die Kraftfahrzeugkomponente so gestaltet, dass das Mittel, welches das Betätigungselement gegen das Führungselement vorspannt, möglichst nah am Schwerpunkt des Betätigungselementes, besonders bevorzugt im Bereich des Schwerpunkts des Betätigungselementes, ganz besonders bevorzugt ganz genau im Schwerpunkt angeordnet ist. Mit diesen bevorzugten Ausführungsformen der vorliegenden Erfindung lässt sich eine Geräuschentwicklung besonders effizient vermindern bzw. vollständig verhindern.

Das Betätigungselement und das Mittel zum Vorspannen können sowohl aus Metall als auch aus Kunststoff gefertigt sein. Vorzugsweise ist das Betätigungselement aus Metall, während es sich bei dem Vorspannmittel um ein Kunststoffbauteil handelt. Dem entsprechend ist die Kraftfahrzeugkomponente in einer bevorzugten Ausführungsform mehrteilig aufgebaut.

Die erfindungsgemäße Kraftfahrzeugkomponente kann an einer beliebigen Stelle in dem Kraftfahrzeug angeordnet sein. Vorzugsweise ist sie jedoch Teil der Rückbank eines Kraftfahrzeuges und verriegelt reversibel beispielsweise ein Segment der Rückenlehne oder die Rückenlehne insgesamt mit der Fahrzeugkarosserie.

Ein weiterer Gegenstand der vorliegenden Erfindung ist deshalb ein Kraftfahrzeug, das die erfindungsgemäße Kraftfahrzeugkomponente aufweist.

Im folgenden wird die Erfindung anhand der Figuren 1 bis 5 erläutert. Diese Erläuterungen sind lediglich beispielhaft und schränken den allgemeinen Erfindungsgedanken nicht ein.
- **Figur 1**: zeigt eine Ausführungsform der erfindungsgemäßen Kraftfahrzeugkomponente,
- **Figur 2**: zeigt ein Detail der Kraftfahrzeugkomponente gemäß Figur 1,
- **Figur 3**: zeigt eine dreidimensionale Darstellung des Betätigungselements und des Mittels zum Vorspannen,
- **Figur 4**: zeigt das Segment einer Rückenlehne mit der erfindungsgemäßen Kraftfahrzeugkomponente und
- **Figur 5**: zeigt ein Detail der Rückenlehne gemäß Figur 4.

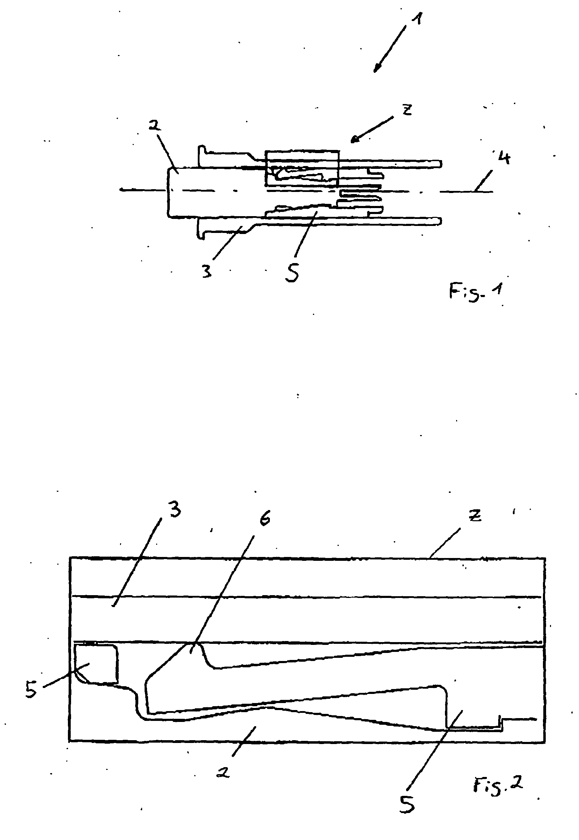

**Figur 1** zeigt eine Ausführungsform der erfindungsgemäßen Kraftfahrzeugkomponente 1, die ein Betätigungselement 2, in dem vorliegenden Fall ein Verriegelungsbolzen, und ein rohrförmiges Führungselement 3 aufweist. Das Betätigungselement 2 ist entlang der Längsachse 4 in beiden Richtungen verschieblich gelagert. Zwischen der Außenkontur des Betätigungselementes 2 und dem Innendurchmesser des Führungselementes 3 ist ein gewisses Spiel gegeben, so dass das Betätigungselement leicht hin und her entlang der Längsachse 4 schiebbar ist. An dem Betätigungselement 2 ist ein Mittel 5 angeordnet, mit dem ein Teil der Außenkontur des Betätigungselements 2 gegen einen Teil der Innenkontur des Führungselements 3 permanent drückbar ist, so dass bei Vibrationen, die beispielsweise durch den Straßenbelag oder die Schwingungen des Motors erzeugt werden, die Teile 2 und 3 nicht gegeneinander schlagen und somit zu einer Geräuschentwicklung führen. Der Fachmann erkennt, dass das Mittel 5 auch an dem Führungselement angeordnet und gegen Das Betätigungselement drücken kann. Ein Detail Z des Vorspannmittels ist in **Figur 2** dargestellt.

**Figur 2** zeigt das Detail Z der **Figur 1****.** Es ist deutlich zu erkennen, dass das Vorspannmittel 5 als eine radial federnde Nase 6 ausgebildet ist, die gegen die Innenseite des rohrförmigen Führungselementes 3 drückt und somit das Betätigungselement einseitig gegen das Führungselement vorspannt. Auch im vorgespannten Zustand liegt die Nase 6 nicht an dem Betätigungselement 2 an.

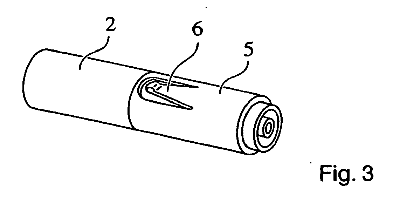

**Figur 3** zeigt eine dreidimensionale Darstellung des Betätigungselements 2, in dem vorliegenden Fall einen bolzenartigen Riegel. Die linke Seite des bolzenartigen Riegels wirkt mit einer Ausnehmung zusammen und verriegelt somit zwei Fahrzeugkomponenten miteinander. Auf der rechten Seite ist auf dem Bolzen das Vorspannmittel 5 angeordnet, das die bereits beschriebene axial federnde Nase 6 aufweist, die mit der Innenseite des rohrförmigen Führungselementes zusammenwirkt und somit das Betätigungselement 2 in eine leicht exzentrische Stellung vorspannt. Das Betätigungselement 2 und das Vorspannmittel 5 werden in dem dargestellten vormontierten Zustand in das Führungselement (nicht dargestellt) eingeführt.

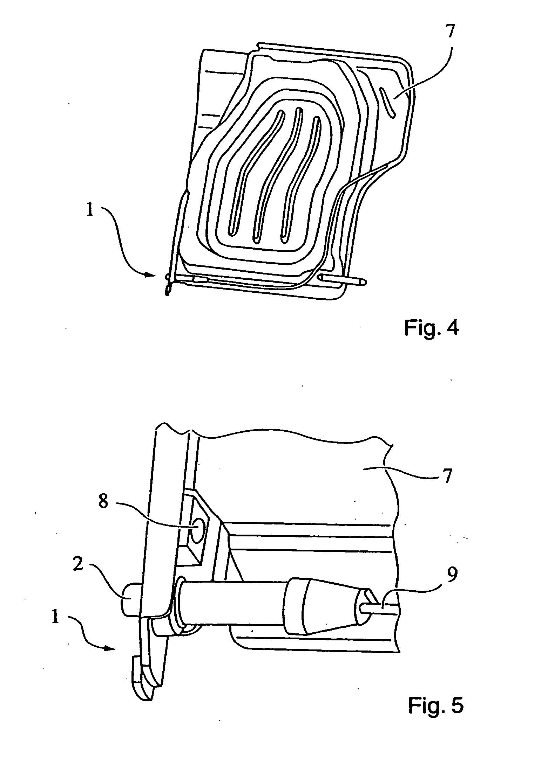

**Figur 4** zeigt ein Teilsegment 7 der Rücklehne eines Kraftfahrzeuges, das die erfindungsgemäße Kraftfahrzeugkomponente, die insbesondere in den **Figuren 1** bis 3 beschrieben ist, aufweist.

**Figur 5** zeigt ein Detail der Rücklehne gemäß **Figur 5****.** Die Rücklehne 7 ist um Gelenk 8 schwenkbar gelagert und wird insbesondere in ihrer Gebrauchsstellung, d. h. in der Stellung, in welcher Personen auf der Rückbank Platz nehmen können, mittels der erfindungsgemäßen Kraftfahrzeugkomponente 1 verriegelt, die auf ihrer linken Seite das Betätigungselement 2 aufweist, das mit einer kreisförmigen Ausnehmung, die fest mit der Karosserie verbunden ist, im verriegelten Zustand zusammenwirkt. Das Betätigungselement 2 ist, wie bereits dargestellt, in der rohrförmigen Führungskomponente axial verschieblich angeordnet, wobei die axiale Verschiebung durch den in **Figur 5** angedeuteten Bowdenzug 9 erfolgt, so dass die erfindungsgemäße Kraftfahrzeugkomponente auch an sehr schlecht zugänglichen Stellen angeordnet werden kann. Der Bowdenzug kann manuell oder motorisch angetrieben werden.

### Bezugszeichenliste

- 1: Kraftfahrzeugkomponente, Ver-, Entriegelungskomponente
- 2: Betätigungselement, bolzenartiger Riegel
- 3: Führungselement, rohrförmiges Element
- 4: Längsachse
- 5: Mittel, Vorspannmittel
- 6: radial federnde Nase
- 7: Rücklehne
- 8: Drehlager der Rücklehne
- 9: Bowdenzug

## Patentansprüche

1. Kraftfahrzeugkomponente (1), insbesondere zum Ver- und Entriegeln von Fahrzeugteilen, mit einem Betätigungselement (2), das in einem Führungselement (3) angeordnet ist, wobei das eine Führungselement eine Längsachse (4) aufweist, das Betätigungselement (2) entlang der Längsachse (4) axial verschieblich angeordnet ist und die Kraftfahrzeugkomponente (1) ein Mittel (5) aufweist, das das Betätigungselement (2) gegen das Führungselement (3) vorspannt, **dadurch gekennzeichnet, dass** das Betätigungselement (2) in jeder Stellung gegen das Führungselement vorgespannt ist.

2. Kraftfahrzeugkomponente nach Anspruch 1, **dadurch gekennzeichnet, dass** das Betätigungselement (2) in mindestens zwei Stellungen verschiebbar ist.

3. Kraftfahrzeugkomponente nach einem der voranstehenden Ansprüche, **dadurch gekennzeichnet, dass** das Betätigungselement (2) exzentrisch in dem Führungselement (3) angeordnet ist.

4. Kraftfahrzeugkomponente nach einem der voranstehenden Ansprüche, **dadurch gekennzeichnet, dass** das Betätigungselement (2) ein Sperrbolzen ist.

5. Kraftfahrzeugkomponente nach einem der voranstehenden Ansprüche, **dadurch gekennzeichnet, dass** das Führungselement (3) ein Rohr ist.

6. Kraftfahrzeugkomponente nach einem der voranstehenden Ansprüche, **dadurch gekennzeichnet, dass** das Mittel (5) ein Federelement ist.

7. Kraftfahrzeugkomponente nach einem der voranstehenden Ansprüche, **dadurch gekennzeichnet, dass** das Mittel (5) im Bereich des Schwerpunktes des Betätigungselementes (2) angeordnet ist.

8. Kraftfahrzeugkomponente nach einem der voranstehenden Ansprüche, **dadurch gekennzeichnet, dass** das Betätigungselement (2) und das Mittel (5) aus Metall und/oder Kunststoff sind.

9. Kraftfahrzeugkomponente nach einem der voranstehenden Ansprüche, **dadurch gekennzeichnet, dass** sie mehrteilig aufgebaut ist.

10. Kraftfahrzeugkomponente nach einem der voranstehenden Ansprüche, **dadurch gekennzeichnet, dass** sie ein Teil der Rückbank eines Kraftfahrzeuges ist.

11. Kraftfahrzeug aufweisend eine Kraftfahrzeugkomponente gemäß einem der Ansprüche 1-11.

## Claims

1. Motor vehicle component (1), particularly for locking and unlocking vehicle parts, with an actuating element (2), which is arranged in a guide element (3), wherein the one guide element has a longitudinal axis (4), the actuating element (2) is arranged in an axially displaceable manner along the longitudinal axis (4), and the motor vehicle component (1) has a means (5) which prestresses the actuating element (2) against the guide element (3), **characterized in that** the actuating element (2) is prestressed in every position against the guide element.

2. Motor vehicle component according to Claim 1, **characterized in that** the actuating element (2) is displaceable in at least two positions.

3. Motor vehicle component according to one of the preceding claims, **characterized in that** the actuating element (2) is arranged eccentrically in the guide element (3).

4. Motor vehicle component according to one of the preceding claims, **characterized in that** the actuating element (2) is a locking bolt.

5. Motor vehicle component according to one of the preceding claims, **characterized in that** the guide element (3) is a tube.

6. Motor vehicle component according to one of the preceding claims, **characterized in that** the means (5) is a spring element.

7. Motor vehicle component according to one of the preceding claims, **characterized in that** the means (5) is arranged in the region of the centre of gravity of the actuating element (2).

8. Motor vehicle component according to one of the preceding claims, **characterized in that** the actuating element (2) and the means (5) are made of metal and/or plastic.

9. Motor vehicle component according to one of the preceding claims, **characterized in that** it is of multipart construction.

10. Motor vehicle component according to one of the preceding claims, **characterized in that** it is part of the rear bench of a motor vehicle.

11. Motor vehicle having a motor vehicle component according to one of Claims 1 -10.

## Revendications

1. Composant de véhicule (1), en particulier pour le verrouillage et le déverrouillage de pièces de véhicule, comprenant un élément d'actionnement (2) qui est disposé dans un élément de guidage (3), cet élément de guidage présentant un axe longitudinal (4), l'élément d'actionnement (2) étant disposé de manière déplaçable axialement le long de l'axe longitudinal (4) et le composant de véhicule (1) présentant un moyen (5) qui précontraint l'élément d'actionnement (2) contre l'élément de guidage (3), **caractérisé en ce que** l'élément d'actionnement (2) est précontraint dans chaque position contre l'élément de guidage.

2. Composant de véhicule selon la revendication 1, **caractérisé en ce que** l'élément d'actionnement (2) peut être déplacé dans au moins deux positions.

3. Composant de véhicule selon l'une quelconque des revendications précédentes, **caractérisé en ce que** l'élément d'actionnement (2) est disposé de manière excentrée dans l'élément de guidage (3).

4. Composant de véhicule selon l'une quelconque des revendications précédentes, **caractérisé en ce que** l'élément d'actionnement (2) est un boulon de blocage.

5. Composant de véhicule selon l'une quelconque des revendications précédentes, **caractérisé en ce que** l'élément de guidage (3) est un tube.

6. Composant de véhicule selon l'une quelconque des revendications précédentes, **caractérisé en ce que** le moyen (5) est un élément de ressort.

7. Composant de véhicule selon l'une quelconque des revendications précédentes, **caractérisé en ce que** le moyen (5) est disposé dans la région du centre de gravité de l'élément d'actionnement (2).

8. Composant de véhicule selon l'une quelconque des revendications précédentes, **caractérisé en ce que** l'élément d'actionnement (2) et le moyen (5) sont en métal et/ou en plastique.

9. Composant de véhicule selon l'une quelconque des revendications précédentes, **caractérisé en ce qu'**il est réalisé en plusieurs parties.

10. Composant de véhicule selon l'une quelconque des revendications précédentes, **caractérisé en ce qu'**il constitue une partie de la banquette arrière d'un véhicule.

11. Véhicule présentant un composant de véhicule selon l'une quelconque des revendications 1 à 10.
